# EUROPÄISCHE PATENTANMELDUNG

(11) **EP 0 668 135 A2**
(43) Veröffentlichungstag der Anmeldung: **23.08.1995**
(21) Anmeldenummer: 95102438.9
(22) Anmeldetag: 21.02.1995
(51) Int. Cl.: B29C 33/52, B29C 33/48

(54) **Füllstoff zur Herstellung von Hohlkörperkernen und Verfahren zur Herstellung von Formkörpern**

(30) Priorität: 21.02.1994 DE 4405493
(71) Anmelder: BASF AKTIENGESELLSCHAFT, D-67056 Ludwigshafen (DE)
(72) Erfinder: Hauck, Christian, Dr., D-64668 Rimbach (DE); Meyer, Claus, D-67117 Limburgerhof (DE); Wüst, Andreas, D-64347 Griesheim (DE)
(74) Vertreter: Geissler, Bernhard, Dr.

(57) **Zusammenfassung**

Die Erfindung betrifft einen Füllstoff zur Herstellung von Hohlkörperkernen. Der Füllstoff besteht aus einem ersten Material, das einen geringeren Schmelzpunkt als ein auf dem Hohlkörper zu bildender Hohlkörper hat, und aus Teilen eines zweiten Materials, das einen höheren Schmelzpunkt als das erste Material hat, wobei der Füllstoff bei der Herstellung der Hohlkörperkerne gießfähig ist.

Die Hohlkörperkerne werden insbesondere zur Herstellung von Formkörpern, insbesondere aus Kunststoff verwendet, wobei die Hohlkörperkerne aus zumindestens einem Hohlraum des Formkörpers ausgeschmolzen werden. Dabei wechselt nur das erste Füllstoffmaterial den Phasenzustand.

## Beschreibung

Die Erfindung betrifft einen Füllstoff zur Herstellung von Hohlkörperkernen, einen Hohlkörperkern und ein Verfahren zur Herstellung von Formkörpern, insbesondere aus Kunststoff, nach dem Oberbegriff der unabhängigen Patentansprüche.

Aus der GB-PS 1 250 476 ist bereits ein Verfahren bekannt, mit dem Spritzgußteile mit sogenannten nicht entformbaren Innenkonturen hergestellt werden können. Dazu wird ein Kern aus einer niedrigschmelzenden Metallegierung, vorzugsweise eine SnBi-Legierung, verwendet, die in einem weiteren Verfahrensschritt aus dem Spritzgußteil ausgeschmolzen wird.

Aus der Offenlegungsschrift DE 31 08 828 ist ein Spezialverfahren zum Spritzgießen von Kunststoffteilen mit hohl oder gegeneinander verjüngten gekrümmten Formen sowie ein Kern zur Durchführung des Verfahrens bekannt. Dieser Kern schließt Einsätze aus nicht schmelzbarem Material und mit geringem Wärmeleitwiderstand ein, die aus dem Kunststoffteil durch dessen Öffnungen nach dem Schmelzen des Kern herausgezogen werden können.

Dieses Verfahren, das auch unter dem Namen Schmelzkerntechnik bekannt ist, wird in großem Umfang zur Herstellung insbesondere von spritzgegossenen Kunststoffgehäusen mit strömungsgünstigen Innenkonturen, insbesondere von Motoransaugrohren aus Polyamid eingesetzt (C. Hauck/A. Schneiders: "Optimieren der Schmelzkerntechnik für das Thermoplast-Spritzgießen", Sonderdruck aus der Zeitschrift Kunststoffe, Karl Hanser Verlag, München 1987). Ein Problem der Schmelzkerntechnik stellt der hohe Zeit- und Energieaufwand für das Gießen und Ausschmelzen der verlorenen Kerne dar. Der Einsatz elektromagnetischer Induktion zum Ausschmelzen verringert zwar die Ausschmelzzeiten, nicht jedoch den erforderlichen Energieeinsatz. Energiekosten lassen sich durch den Einsatz von Hohlkernen verringern (Mapleton, Peter: "Lost-core Technology takes a whole in production of hollow parts", MODERN PLASTICS INTERNATIONAL, November 1990, Seiten 48 ff.) Dabei wird beim Kerngießen der noch flüssige Teil der Schmelze ausgegossen oder mit einem Gas, insbesondere Stickstoff, ausgeblasen. Die dabei auftretenden hohen Drücke stehen jedoch dem Einsatz des Kerngießens für Hohlkerne größerer Teile, insbesondere Saugrohre, entgegen, da die Kerne sich unzulässig verformen bzw. unter dem Spritzdruck kollabieren.

Ausgehend von diesem Stand der Technik liegt der Erfindung das technische Problem zugrunde, einen Füllstoff bzw. ein Verfahren der eingangs genannten Art anzugeben, welche die Herstellung auch relativ großer Hohlkörperkerne bzw. die Herstellung von Formkörpern unter Benutzung von Hohlkörperkernen mit einem geringeren Energieeinsatz ermöglichen, wobei der Füllstoff gut verarbeitbar sein soll.

Zur Losung dieses Problems werden erfindungsgemäß Füllstoffe, Hohlkörperkerne und Formkörperherstellungsverfahren bereitgestellt, wie sie in den Patentansprüchen definiert sind.

Die Erfindung zeichnet sich durch eine Mehrzahl von Vorteilen aus. Sie ermöglicht es, nur eines von mehreren Materialien des Füllstoffs, und damit nur einen Teil des Füllstoffs in den Schmelzzustand zu versetzen, wodurch sowohl die Zeit für die Herstellung von Hohlkörperkernen bzw. von Formkörpern verkürzt wird als auch die für das Ausschmelzen erforderliche Energie reduziert wird.

Das erfindungsgemäße Verfahren ermöglicht auch die Benutzung eines Hohlkörperkerns, der in seinem inneren Bereich aus einem ersten und aus Teilen eines zweiten Materials gebildet ist, während der Hohlkörperkern in seinem äußeren Bereich nur aus dem ersten Material gebildet ist, wobei das erste Material einen geringeren Schmelzpunkt als das zweite Material aufweist, wobei der Füllstoff bei der Herstellung der Hohlkörperkerne gießfähig ist.

Damit läßt sich die Oberfläche des Hohlkörperkerns und der korrespondierende Abschnitt des Formkörpers glatt ausgestalten, selbst wenn das zweite Material wie beispielsweise Stahlkugeln, die Bildung glatter Oberflächen erschweren sollte. Die gebildeten Oberflächen auf dem Hohlkörperkern bzw. dem Formkörper sind damit unabhängig von der geometrischen Form des zweiten Materials.

Vorteilhafte Ausgestaltungen des Füllstoffs zur Herstellung der Hohlkörperkerne sind in den Unteransprüchen angegeben. Insbesondere ein Füllstoff, bei dem sowohl das erste als auch das zweite Material metallisch ist, bietet den Vorteil einer guten Wärmeleitfähigkeit und einer hohen Wärmekapazität, welche eine gute Kühlung der Kunststoffschmelze im Spritzgießprozeß ermöglichen.

Die elektrische Leitfähigkeit und magnetische Permeabilität des erfindungsgemäß bevorzugten metallischen Füllstoffs ermöglicht es auch, die an sich bekannte elektromagnetische Induktion zur Beschleunigung des Ausschmelzvorganges einzusetzen.

Die Erfindung wird nun anhand von Ausführungsbeispielen beschrieben.

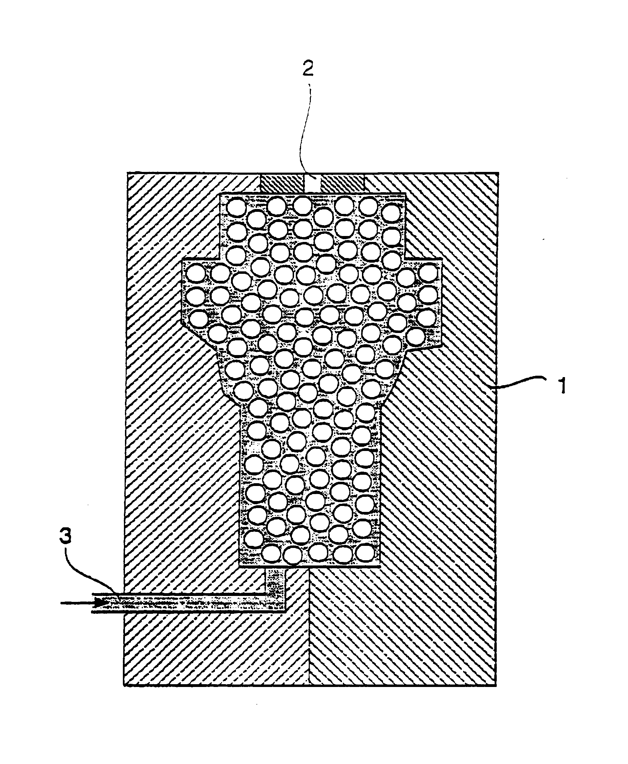

Die Figur zeigt eine Vorrichtung zur erfindungsgemäßen Herstellung von Hohlkörperkernen. Die in der Figur dargestellte Vorrichtung besteht aus einer Kokille 1. Die Kokille 1 kann eine oder mehrere Aufnahmeöffnungen für die Aufnahme eines ersten und gegebenenfalls weiterer Füllstoffmaterien aufweisen. Die in der Figur dargestellte Ausführungsform der Vorrichtung hat in ihrem oberen Bereich eine erste Aufnahmeöffnung 2 für die Aufnahme eines Füllstoffmaterials und eine von der ersten Aufnahmeöffnung 2 getrennte zweite Aufnahmeöffnung 3 für die Aufnahme eines weiteren, insbesondere gießfähigen Füllstoffmaterials.

Das in die erste Aufnahmeöffnung 2 einzuführende Füllstoffmaterial ist dasjenige Material, zum Beispiel in Form von Stahlkugeln, das im Rahmen des erfindungsgemäßen Verfahrens nicht geschmolzen wird. Dieses Material wird im folgenden als zweites Material bezeichnet.

Das in die zweite Aufnahmeöffnung 3 einzuführende Füllstoffmaterial ist dasjenige Material, z. B. eine niedrig-schmelzende Metallegierung, das im Rahmen des erfindungsgemäßen Verfahrens geschmolzen wird. Dieses Material wird im folgenden als erstes Material bezeichnet.

Es kann vorgesehen sein, daß der Füllstoff bestehend aus dem ersten Material, zum Beispiel einer Metallschmelze, und dem zweiten Material, zum Beispiel Metallkugeln eines höheren Schmelzpunktes (über die erste und/oder zweite Aufnahmeöffnung 2,3) in die Kokille 1 gegossen wird. Insgesamt ist der aus den beiden Materialien bestehende Füllstoff zum Zeitpunkt der Herstellung jeweils eines Hohlkörperkerns, insbesondere zum Zeitpunkt des Einfüllens in die Kokille gießfähig.

Das erfindungsgemäße Verfahren dient zur Herstellung von Formkörpern, die insbesondere aus Kunststoff bestehen. Die herzustellenden Formkörper weisen mindestens einen Hohlraum auf, bei welchem das Formkörpermaterial in erweichter bzw. verflüssigter Form auf zumindest einen Teil der Oberfläche eines Hohlkörperkerns aufgebracht wird.

Die äußere Form des Hohlkörperkerns entspricht zumindest einem Abschnitt des Hohlraums des Formkörpers.

Nach dem Aufbringen des erweichten bzw. verflüssigten Formkörpermaterials auf zumindest einen Teil der Oberfläche des Hohlkörperkerns kühlt das Formkörpermaterial ab und verfestigt sich (erstarrt).

Im Anschluß wird der Hohlkörperkern auf eine Temperatur erwärmt, die unterhalb des Schmelzpunktes bzw. des Erweichungspunkts des Formkörpermaterials liegt. Insbesondere wird der Hohlkörperkern auf die Temperatur erwärmt, bei der das erste Material, beispielsweise eine SnBi-Legierung schmilzt. Auf diese Weise wird sowohl das erste, schmelzende Material des Füllstoffs als auch das zweite, nichtschmelzende Material des Füllstoffs, zum Beispiel die Stahlkugeln, aus dem Formkörper entfernt.

Im Rahmen des erfindungsgemäßen Verfahrens wird ein Hohlkörperkern aus einem Füllstoff bzw. einem Gießwerkstoff verwendet, der aus mindestens einer ersten Phase eines ersten Materials besteht, das einen geringeren Schmelzpunkt als das Formkörpermaterial hat, sowie aus mindestens einer diskret in der ersten Phase vorhandenen zweiten Phase aus einem zweiten Material, das einen höheren Schmelzpunkt als das erste Material hat.

Im Rahmen des erfindungsgemäßen Verfahrens wechselt beim Entfernen des Hohlkörperkerns nur das niedrigschmelzende erste Füllstoffmaterial (zum Beispiel die SnBi-Legierung) die Phase, nicht jedoch das zweite Material (zum Beispiel die Stahlkugeln), bzw. weitere Materialien der Schmelzpunkt über dem Schmelzpunkt des ersten Materials liegt.

Das erste und das zweite Füllstoffmaterial werden in die in der Figur dargestellten Vorrichtung eingeführt, wobei - wie schon beschrieben - vorgesehen sein kann, daß das zweite Material, beispielsweise Metallkugeln, in eine obere Aufnahmeöffnung 2 eingeführt wird, während das erste Material, insbesondere eine Metall-Schmelze, in eine untere Aufnahmeöffnung 3 eingeführt wird.

Alternativ kann vorgesehen sein, daß der Füllstoff insgesamt, also das erste Material, eine Metallschmelze, und das zweite Material, die Metallkugeln, zusammen in die Kokille 1 gegossen wird. Zur Bildung glatter Oberflächen, die von der Oberflächenbeschaffenheit des zweiten Materials (z.B. Metallkugeln) unabhängig ist, wird der Hohlkörperkern in seinem inneren Bereich aus dem ersten und zweiten Material gebildet, während der Hohlkörperkern in seinem äußeren Bereich aus dem ersten Material gebildet wird. Hierzu wird die in der Figur dargestellte Kokille 1 beispielsweise mit einer SnBi-Legierung gefüllt. Kurz nach Erstarren der Legierung an der Oberfläche der Kokille 1 wird die Schmelze abgegossen und anschließend wird der restliche Hohlraum mit dem Füllstoff, bestehend aus dem ersten und zweiten Material, beispielsweise der SnBi-Legierung und den Metallkugeln ausgegossen. Gute Oberflächenqualitäten werden bereits mit einer dünnen Schicht von wenigen Zehntelmillimetern des ersten Materials (z.B. SnBi-Legierung) erzielt. Diese Ausführungsform des erfindungsgemäßen Verfahrens zeichnet sich durch eine verkürzte Zykluszeit aus.

Der erfindungsgemäße Füllstoff zur Herstellung von Hohlkörperkernen besteht aus einem ersten Material, das einen geringeren Schmelzpunkt als ein auf dem Hohlkörperkern zu bildender Hohlkörper hat, und aus Teilen eines zweiten Materials, das einen höheren Schmelzpunkt als das erste Material hat.

Der erfindungsgemäße Füllstoff ist also nicht homogen, sondern besteht aus zumindest zwei verschiedenen Materialien mit unterschiedlichen Schmelzpunkten. Er ist nahezu beliebig oft für die Herstellung von Hohlkörperkernen verwendbar.

Das erste Material des Füllstoffs ist beispielsweise ein wärmeleitfähiges Material, insbesondere eine niedrig-schmelzende Metallegierung, vorzugsweise eine SnBi-Legierung.

Das zweite Material des erfindungsgemäßen Füllstoffs kann organisch sein, beispielsweise ist das zweite Material ein thermoplastischer oder duroplastischer Kunststoff. Geeignete Thermoplaste sind insbesondere die eine hohe Wärmeformbeständigkeit aufweisenden aromatischen Polyether und Polythioether, z. B. Polyphenylenether, Polysulfon, Polyethersulfon, Polyetherimid, Polyetherketon oder Polyphenylensulfid. Als Duroplaste kommen zweckmäßig Polyesterharze in Betracht.

Das zweite Material des erfindungsgemäßen Füllstoffs kann nichtorganisch sein und beispielsweise aus Mineralien, Glas oder Keramik bestehen; es ist vorzugsweise ein Metall, ein Metallgemisch oder eine Metallegierung.

Insbesondere ist das zweite Material aus Formkörpern, im allgemeinen aus kleinteiligen Partikeln gebildet, insbesondere aus Kugeln, vorzugsweise Stahlkugeln.

Die Kugeln weisen einen Durchmesser von 0,1 bis 20 mm, vorzugsweise von 0,5 bis 2 mm, auf. Die Größe der Teile bzw. Kugeln wird dabei so gewählt, daß diese beim Ausschmelzen aus einer Öffnung des Formkörpers austreten können. Die Teile bzw. Kugeln sind also vorzugsweise kleiner als diese Öffnung.

Insbesondere bei Verwendung eines ersten und zweiten Füllstoffmaterials, das jeweils metallisch ist, zeichnet sich der Füllstoff durch eine hohe Wärmeleitfähigkeit und hohe elektrische Leitfähigkeit aus. Die hohe Wärmeleitfähigkeit des Füllstoffs ermöglicht relativ kürze Zykluszeiten, während die elektrische Leitfähigkeit den Einsatz der elektromagnetischen Induktion zur Beschleunigung des Ausschmelzvorgangs ermöglicht.

Insbesondere metallische Füllstoffe aus niedrig-schmelzenden Nichteisenlegierungen, wie z.B. SnBi-Legierungen, und Eisenlegierungen zeichnen sich durch eine hohe magnetische Permeabilität aus. Die hohe Wärmeleitfähigkeit des metallischen Füllstoffes ermöglicht eine gute Wärmeabfuhr und damit kürze Zykluszeiten beim Spritzgießvorgang. Die deutlich besseren elektrischen und magnetischen Eigenschaften des Füllstoffes bewirken im Vergleich zu den bisher eingesetzten Nichteisenlegierungen, eine deutliche Beschleunigung des Ausschmelzvorganges. Dadurch können Anlagekosten (geringere Zykluszeiten, geringerer Energiebedarf) der bekannten Schmelzkerntechnik deutlich reduziert werden.

Inbesondere Eiserlegierungen wie Stahl, ferromagnetische Oxide und weichmagnetische Legierungen bewirken als Komponente des Füllstoffes den oben beschriebenen Effekt.

Das Volumen des zweiten Materials beträgt etwa 10-90%, insbesondere 20-50% des Volumens des Füllstoffs, also der Gesamtmenge aus erstem und zweitem Material. Dieses Volumenverhältnis zwischen zweitem und erstem Material ist abhängig von der Größe und Form der Komponenten des zweiten Materials.

Die Erfindung betrifft auch einen Hohlkörperkern zur Herstellung von Formkörpern mit zumindest einem zu dem Hohlkörperkern zumindest teilweise komplementären Hohlraum. Der erfindungsgemäße Hohlkörperkern besteht dabei aus einem Füllstoff wie beschrieben und kann ebenfalls Hohlräume und/oder Kanäle für die Zufuhr eines Kühlmittels enthalten.

Zur Bildung glatter Oberflächen ist der erfindungsgemäße Hohlkörperkern in seinem inneren Bereich aus dem ersten und zweiten Material gebildet, während er in seinem äußeren Bereich nur aus dem ersten Material gebildet ist.

Die Hohlkörperkerne werden insbesondere zur Herstellung von Formkörpern, insbesondere aus Kunststoff verwendet, wobei die Hohlkörperkerne aus zumindestens einem Hohlraum des Formkörpers ausgeschmolzen werden. Dabei wechselt nur das erste Füllstoffmaterial den Phasenzustand.

## Patentansprüche

1. Füllstoff zur Herstellung von Hohlkörperkernen, bestehend aus einem ersten Material, das einen geringeren Schmelzpunkt als ein auf dem Hohlkörperkern zu bildender Hohlkörper hat, und aus Teilen eines zweiten Materials, das einen höheren Schmelzpunkt als das erste Material hat, dadurch gekennzeichnet, daß der Füllstoff bei der Herstellung der Hohlkörperkerne gießfähig ist.

2. Füllstoff nach Anspruch 1, dadurch gekennzeichnet, daß das zweite Material organisch ist.

3. Füllstoff nach Anspruch 1, dadurch gekennzeichnet, daß das zweite Material nichtorganisch, vorzugsweise ein Metall oder Metallgemisch oder eine Metallegierung, insbesondere Stahl, ferromagnetisches Oxid oder weichmagnetische Legierung ist.

4. Füllstoff nach einem der Ansprüche 1-3, dadurch gekennzeichnet, daß die Teile aus dem zweiten Material als Formkörper, insbesondere Kugeln, vorzugsweise Stahlkugeln, gebildet sind.

5. Füllstoff nach Anspruch 4, dadurch gekennzeichnet, daß die Teile als Kugeln mit einem Durchmesser von 0,1 bis 20 mm, vorzugsweise von 0,5 bis 2 mm, ausgebildet sind.

6. Füllstoff nach einem der vorstehenden Ansprüche, dadurch gekennzeichnet, daß das Volumen des zweiten Materials etwa 10 - 90 Prozent, insbesondere 20 - 50 Prozent des Volumens des Füllstoffs beträgt.

7. Füllstoff nach einem der vorstehenden Ansprüche, dadurch gekennzeichnet, daß das erste Material ein wärmeleitfähiges Material, insbesondere eine niedrig-schmelzende Metallegierung, vorzugsweise eine SnBi-Legierung ist.

8. Hohlkörperkern zur Herstellung von Formkörpern mit zumindest einem zu dem Hohlkörperkern zumindest teilweise komplementären Hohlraum, dadurch gekennzeichnet, daß der Hohlkörperkern aus einem Füllstoff nach einem der auf Füllstoff gerichteten Ansprüche besteht.

9. Hohlkörperkern nach Anspruch 8, dadurch gekennzeichnet, daß der Hohlkörperkern in seinem inneren Bereich aus dem ersten und zweiten Material gebildet ist, und daß der Hohlkörper in seinem äußeren Bereich aus dem ersten Material gebildet ist.

10. Verfahren zur Herstellung von Formkörpern aus einem Formkörpermaterial, insbesondere Kunststoff, wobei die Formkörper zumindest einen Hohlraum aufweisen, bei welchem das Formkörpermaterial in erweichter bzw. verflüssigter Form auf zumindest einen Teil der Oberfläche eines Hohlkörperkerns, dessen äußere Form zumindest einem Abschnitt des Hohlraums des Formkörpers entspricht, aufgebracht und dort erstarren gelassen wird, und bei dem anschließend der Hohlkörperkern unter Erwärmung auf eine Temperatur, die unterhalb des Schmelzpunkts, bzw. Erweichungspunkts des Formkörpermaterials liegt, und unter Schmelzen von Kernkörpermaterial entfernt wird,
dadurch gekennzeichnet, daß
ein Hohlkörperkern verwendet wird, der aus mindestens einer ersten Phase eines ersten Materials besteht, das einen geringeren Schmelzpunkt als das Formkörpermaterial hat, sowie aus mindestens einer diskret in der ersten Phase vorhandenen zweiten Phase aus einem zweiten Material, das einen höheren Schmelzpunkt als das erste Material hat.

11. Verfahren nach Anspruch 10, dadurch gekennzeichnet, daß als Hohlkörperkern ein solcher nach einem der auf einen Hohlkörperkern gerichteten Ansprüche verwendet wird.
